# EUROPEAN PATENT APPLICATION

(11) **EP 3 825 547 A1**
(43) Date of publication of application: **26.05.2021**
(21) Application number: 18926782.6
(22) Date of filing: 20.07.2018
(51) Int. Cl.: F03D 9/00

(54) **WIND-DRIVEN AND SELF-DRIVEN POWER GENERATION APPARATUS**

(71) Applicant: Lee, Shou-Hsun, 70464 Tainan City (TW); Li, Chun-I, 70464 Tainan (TW)
(72) Inventor: Lee, Shou-Hsun, 70464 Tainan City (TW); Li, Chun-I, 70464 Tainan (TW)
(74) Representative: Morris, Jonathan Paul
(86) International application number: PCT/CN2018/096400
(87) International publication number: WO 2020/014950

(57) **Abstract**

A wind driven electric generator comprises: a fan element including a fan blade and a transmission shaft, the fan blade being served to receive a wind force for rotation, the transmission shaft transferring the rotary motion of the fan blade; a first generator being driven by the transmission shaft to generate electric energy; a motor receiving the electric energy generated by the first generator to rotate the transmission shaft; and a generating device including a second generator, a maximum power point tracker and an energy storage element, the second generator being driven by the transmission shaft to generate electric energy, the electric energy generated by the second generator being stored to the energy storage element under the control of the maximum power point tracker.

## Description

### TECHNICAL FIELD

The present invention relates to a renewable power generator, and more particularly to a wind driven electric generator.

### BACKGROUND

As environment protection is valued, renewable energy has been attracting more and more attention from the public. Wind power plays an important role in the renewable energy. A large-scale wind driven electric generator has been developed as a crucial renewable energy generating device in the world. A small-scale wind driven electric generator, which provides auxiliary electric power, could be even installed on a transportation vehicle or for domestic use. Conventional wind driven electric generators apply fan blades, which are rotated by wind force generated by flowing air, to drive the generator to generate electricity. However, when the wind is weak or insufficient, the conventional wind driven electric generators do not provide kinetic energy to the shaft to maintain its rotational speed such that it makes the conventional wind driven electric generators hard or cannot be activated, or have difficulty in power generation when the wind weakens, and thus the problems of stability and efficiency of power generation should be overcome.

### SUMMARY

Accordingly, an object of the present invention is to provide a wind driven electric generator having different structure from the conventional wind driven electric generator to have merits that the wind driven electric generator could be easier to be activated and being capable of maintaining its rotation longer than the conventional wind driven electric generator when the wind is weak. Thus the wind driven electric generator could generate electricity more steadily and efficiently.

To solve the issues in the prior art, the present invention provides a wind driven electric generator, comprising: a fan element including a fan blade and a transmission shaft, the fan blade being served to receive a wind force for rotation, the transmission shaft being in driven connection with the fan blade to transfer the rotary motion of the fan blade; a first generator being in driven connection with the transmission shaft such that the first generator is driven by the transmission shaft to generate electric energy; a motor electrically connected to the first generator and being in driven connection with the transmission shaft, wherein the motor receives the electric energy generated by the first generator to rotate the transmission shaft, thereby maintaining the rotation of the transmission shaft when a rotational speed of the transmission shaft can not be maintained by wind; and a generating device including a second generator, a maximum power point tracker and an energy storage element, the second generator being in driven connection with the transmission shaft such that the second generator is driven by the transmission shaft to generate electric energy, the maximum power point tracker electrically connected between the second generator and the energy storage element, the electric energy generated by the second generator being stored to the energy storage element under the control of the maximum power point tracker.

According to an embodiment of the present invention, the first generator is a DC generator.

According to an embodiment of the present invention, the motor is a DC motor.

According to an embodiment of the present invention, the fan blade is a curved-type, spiral-type or turbine-vent-type fan blade.

According to an embodiment of the present invention, the maximum power point tracker reduces an amount of power generated by the second generator when the energy storage element is fully charged.

The wind driven electric generator of the present invention is with structure different from the conventional wind driven generator in that its fan blade is connected to the second generator via a kinetic feedback structure composed by the first generator and the motor. The rotation of the transmission shaft drives the first generator to generate electric energy, and the motor receives the electric energy generated by the first generator to rotate the transmission shaft so as to form the kinetic feedback structure. Furthermore, with the maximum power point tracker, the second generator charges the energy storage element at a maximum power to supply power to other devices. As the result, when the wind is too weak or insufficient to maintain the rotation of the transmission shaft, the wind driven electric generator of the present invention can provide kinetic energy to the shaft to keep the shaft rotating for a longer time and make the wind driven electric generator easier to be activated. As a result, when the wind weakens, the situation of restarting the rotation of the fan blade could be further avoided and thus the power generation could be maintained to increase the stability and efficiency of power generation.

### BRIEF DESCRIPTION OF THE DRAWINGS

FIG. 1 is a schematic diagram of a wind driven electric generator according to one embodiment of the present invention;
FIG. 2 is a schematic diagram of the wind driven electric generator being used on a moving vehicle according to the embodiment of the present invention;
FIG. 3 is a schematic diagram of the wind driven electric generator according to another embodiment of the present invention; and
FIG. 4 is a side view of the wind driven electric generator being used on a moving vehicle according to another embodiment of the present invention.

### DETAILED DESCRIPTION OF THE PREFERRED EMBODIMENTS

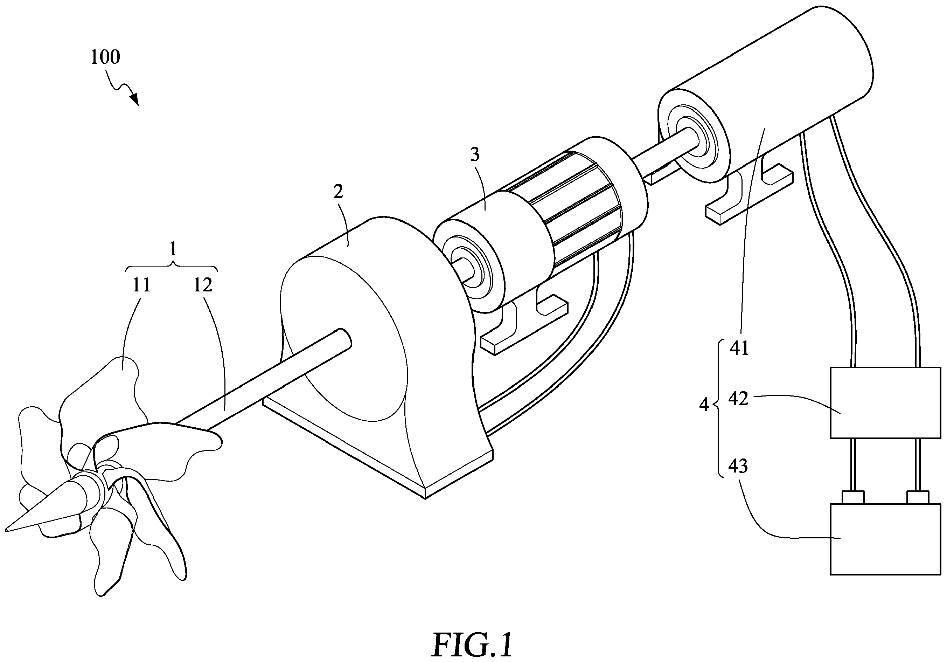

The preferred embodiments of the present invention are described in detail below with reference to Fig. 1 to Fig. 4. The description is used for explaining the embodiments of the present invention only, but not for limiting the scope of the claims.

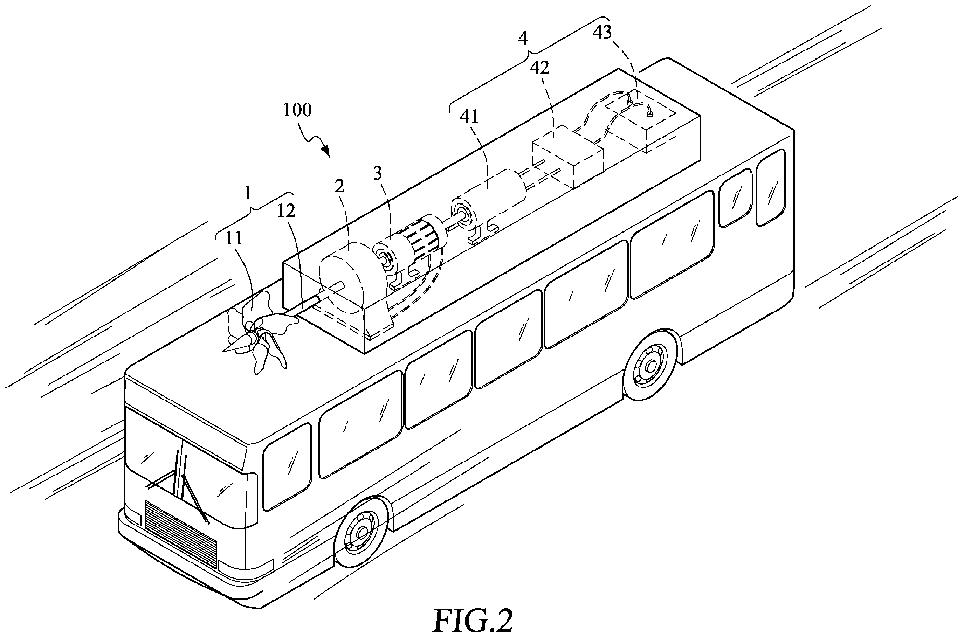

As shown in Fig. 1 and Fig. 2, according to one embodiment of the present invention, a wind driven electric generator 100 comprises: a fan element 1, a first generator 2, a motor 3, and a generating device 4. The fan element 1 includes a fan blade 11 and a transmission shaft 12. The fan blade 11 is served to receive a wind force for rotation. The transmission shaft 12 is in driven connection with the fan blade 11 to transfer the rotary motion of the fan blade 11. The first generator 2 is in driven connection with the transmission shaft 12 such that the first generator 2 is driven by the transmission shaft 12 to generate electric energy. The motor 3 is electrically connected to the first generator 2 and is in driven connection with the transmission shaft 12, wherein the motor 3 receives the electric energy generated by the first generator 2 to rotate the transmission shaft 12, thereby maintaining the rotation of the transmission shaft 12 when a rotational speed of the transmission shaft 12 can not be maintained by wind. The generating device 4 includes a second generator 41, a maximum power point tracker (MPPT) 42 and an energy storage element 43. The second generator 42 is in driven connection with the transmission shaft 12 such that the second generator 41 is driven by the transmission shaft 12 to generate electric energy. The maximum power point tracker 42 is electrically connected between the second generator 41 and the energy storage element 43. The electric energy generated by the second generator 41 is stored to the energy storage element 43 under the control of the maximum power point tracker 42.

The wind driven electric generator 100 of the present invention can be installed on a non-moving object, or it could be installed on a moving object such as a vehicle. As shown in Fig. 2, the fan blade 11 faces the front side of the vehicle. The faster the vehicle is moving forward, the stronger the wind force is received by the fan blade 11 and the higher the rotational speed of the fan blade 11 is.

In this embodiment, the fan blade 11 of the fan element 1 is a curved-type fan blade. In other embodiments, the fan blade 11 also can be a spiral-type fan blade or a turbine-vent-type fan blade. The transmission shaft 12 served as a rotation shaft for the rotary motion of the fan blade 11. The transmission shaft 12 is a single shaft, which is in driven connection with the fan blade 11, the first generator 2, the motor 3 and the second generator 41 to transfer the kinetic energy to the first generator 2. In other embodiments, the transmission shaft 12 also can be multiple shafts, which are driven connected by gears, belt pulleys, transmission, etc., to transfer the kinetic energy of the fan blade 11 to the first generator 2.

In detail, the fan blade 11 receives a wind force for rotation. When the rotational speed of the fan blade 11 reaches a certain level, the fan blade 11 drives the first generator 2 to generate electric energy through the transmission shaft 12. An output end of the first generator 2 is electrically connected to an input end of the motor 3 such that the motor 3 receives the electric energy generated by the first generator 2 to rotate the transmission shaft 12 in a designated direction to form a kinetic feedback structure. The greater the amount of power generated by the first generator 2, the greater the force exerted by the motor 3 that rotates the transmission shaft 12. The second generator 41 is driven by the transmission shaft 12 to generate electric energy. In addition, the second generator 41 charges the energy storage element 43 at the maximum power by the maximum power point tracker 42 to supply power to other devices. As the result, when the wind is too weak or insufficient to maintain the rotation of the transmission shaft 12, the wind driven electric generator 100 of the present invention can provide kinetic energy to the transmission shaft 12 to keep the transmission shaft 12 rotating and make the wind driven electric generator 100 easier to be activated. As a result, when the wind weakens, the ability of power generation can be maintained to increase the stability and efficiency of power generation.

In this embodiment, the first generator 2 is a DC generator. The motor 3 is a matching DC motor. In other embodiments, the first generator 2 can be an AC generator, and the motor 3 also can be an AC motor.

The second generator 41 is a DC generator with output voltage of 12V, 24V, 36V, 48V, 60V, 72V, 84V, 96V, etc. The maximum power point tracker 42 is a controller electrically connected between the second generator 41 and the energy storage element 43. In this embodiment, the energy storage element 43 is a lead-acid battery. In general, the maximum power point tracker 42 operates at the maximum power point under various wind conditions so as to enable the second generator 41 to charge the energy storage element 43 at maximum power degree and thus the optimum efficiency of power usage is achieved. When the energy storage element 43 is fully charged, the maximum power point tracker 42 could no longer operates at the maximum power point so as to decrease the output power of the second generator 41 to meet the need.

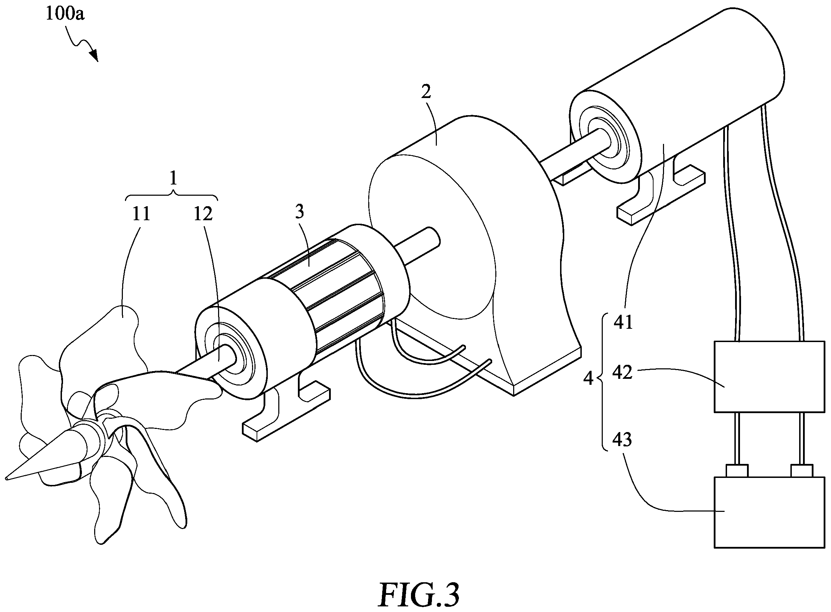

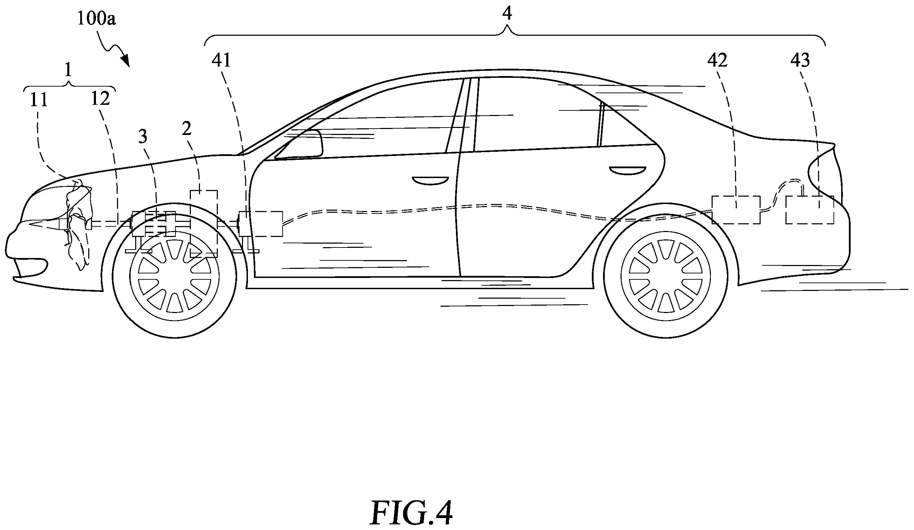

As shown in Fig. 3 and Fig. 4, according to another embodiment of the present invention, a wind driven electric generator 100a is approximately the same as the wind driven electric generator 100 in Fig.1. The main difference is that the arrangement sequence of the first generator 2, the motor 3 and the second generator 41 on the shaft is different. The first generator 2, the motor 3 and the second generator 41 are disposed on the same shaft, and thus their arrangement sequence does not affect their functionality.

## Claims

1. A wind driven electric generator (100), **characterised in that** the wind driven electric generator (100) comprising:
a fan element (1) including a fan blade (11) and a transmission shaft (12), the fan blade (11) being served to receive a wind force for rotation, the transmission shaft (12) being in driven connection with the fan blade (11) to transfer the rotary motion of the fan blade (11);
a first generator (2) being in driven connection with the transmission shaft (12) such that the first generator (2) is driven by the transmission shaft (12) to generate electric energy;
a motor (3) directly and electrically connected to the first generator (2) and being in driven connection with the transmission shaft (12), wherein the motor (3) receives the electric energy generated by the first generator (2) to rotate the transmission shaft (12), thereby maintaining the rotation of the transmission shaft (12) when a rotational speed of the transmission shaft (12) can not be maintained by wind; and
a generating device (4) including a second generator (41), a maximum power point tracker (42) and an energy storage element (43), the second generator (41) being in driven connection with the transmission shaft (12) such that the second generator (41) is driven by the transmission shaft (12) to generate electric energy, the first generator (2), the motor (3) and the second generator (41) being coaxially mounted on the transmission shaft (12), the maximum power point tracker (42) electrically connected between the second generator (41) and the energy storage element (43), the electric energy generated by the second generator (41) being stored to the energy storage element (43) under the control of the maximum power point tracker (42).

2. The wind driven electric generator (100) of claim 1, wherein the first generator (2) is a DC generator.

3. The wind driven electric generator (100) of claim 1, wherein the motor (3) is a DC motor.

4. The wind driven electric generator (100) of claim 1, wherein the fan blade (11) is a curved-type, spiral-type or turbine-vent-type fan blade.

5. The wind driven electric generator (100) of claim 1, wherein the maximum power point tracker (42) reduces an amount of power generated by the second generator (41) when the energy storage element (43) is fully charged.
